# EUROPEAN PATENT SPECIFICATION

(11) **EP 2 919 527 B1**
(45) Date of publication and mention of the grant of the patent: **07.11.2018**
(21) Application number: 13860616.5
(22) Date of filing: 02.12.2013
(51) Int. Cl.: H04W 48/08, H04W 48/16, H04W 48/10, H04W 48/18, H04W 60/04, H04W 84/12

(54) **DEVICE ASSOCIATION METHODS AND SYSTEMS**
VORRICHTUNGSZUORDNUNGSVERFAHREN UND SYSTEME
PROCÉDÉS ET SYSTÈMES D'ASSOCIATION DE DISPOSITIF

(30) Priority: 04.12.2012 CN 201210512787; 28.02.2013 CN 201310066343
(43) Date of publication of application: 16.09.2015
(73) Proprietor: Huawei Device Co., Ltd., Shenzhen, Guangdong 518129 (CN)
(72) Inventor: LI, Xiaoxian, Shenzhen Guangdong 518129 (CN); DING, Zhiming, Shenzhen Guangdong 518129 (CN); PANG, Gaokun, Shenzhen Guangdong 518129 (CN)
(74) Representative: Epping - Hermann - Fischer
(86) International application number: PCT/CN2013/088282
(87) International publication number: WO 2014/086252

(56) References cited:
- CN-A- 101 453 409
- CN-A- 101 483 521
- CN-A- 102 215 486
- CN-A- 103 124 422
- US-A1- 2007 254 614
- US-A1- 2010 265 928
- US-B1- 7 636 338
- DIMITRIS ZISIADIS ET AL: "Enhancing WPS security", WIRELESS DAYS (WD), 2012 IFIP, IEEE, 21 November 2012 (2012-11-21), pages 1-3, XP032298508, DOI: 10.1109/WD.2012.6402836 ISBN: 978-1-4673-4402-9
- AVM: "Installations-Handbuch der Fritz!Box Fon WLAN passage", INSTALLATIONS-HANDBUCH DER FRITZ! FON WLAN, XX, XX, 1 October 2004 (2004-10-01), pages 7-20,37, XP002356490,

## Description

### TECHNICAL FIELD

Embodiments of the present invention relate to communications technologies, and in particular, to a device association method, apparatus, and system.

### BACKGROUND

With the development of network technologies, wireless fidelity (Wireless Fidelity, Wi-Fi for short) networks become increasingly popular, and a growing number of wireless network devices are used.

In the prior art, many users who have set up wireless networks do not configure any security parameter, which makes the networks very vulnerable, and for this reason, the Wi-Fi Alliance has introduced a Wi-Fi protected setup (Wi-Fi protected setup, WPS for short) standard, which is also referred to as Wi-Fi simple configuration (Wi-Fi Simple Configuration, WSC for short); and the purpose of the standard is to simplify operations when a user sets up a wireless local area network (Wireless Local Area Network, WLAN for short), so that the user simply and conveniently sets up a secure WLAN and can conveniently add a device to the WLAN. Specifically, a WPS architecture may be formed by three parts: an access point (Access Point, AP for short), a registrar (Registrar), and a wireless terminal. The registrar is an entity that has the authority to issue and revoke a credential, and may be integrated into the AP or an application terminal, or used as an independent device. The registrar can interact with the AP to implement creation of a WLAN, and subsequently the registrar, the AP, and the wireless terminal may perform interaction to enable the wireless terminal to join the WLAN. A WLAN with an access point is referred to as an infrastructure network, and is referred to as a basic service set (Basic Service Set, BSS for short) network for short in the Institute of Electrical and Electronics Engineers (Institute of Electrical and Electronics Engineers, IEEE for short) 802.11 standard. The existing WPS standard may also be slightly modified for use in a peer-to-peer (Peer-to-Peer, P2P for short) Wi-Fi network, for example, an independent basic service set (Independent Basic Service Set, IBSS for short) network defined in the IEEE 802.11 or a P2P, that is, Wi-Fi Direct, network formulated by the Wi-Fi Alliance.

In the prior art, in a WPS architecture with an AP, when a wireless terminal needs to join a WLAN, the wireless terminal may discover multiple APs, and especially, the names of these APs may be similar or the same; therefore, a user needs to spend time on confirming which AP is the AP that the wireless terminal of the user needs to access, select the AP from a list of these APs, and then initiate subsequent access, or some users does not even clearly know how to select a correct AP, thereby resulting in time consuming and complex operations for the user in a process in which the wireless terminal joins the WLAN. The inventor further finds that in another similar scenario in the prior art, if one device needs to request a connection to another device, a user needs to select the correct another device from multiple devices, and operations of the user in this process are also time consuming and complex.

US 7636338 B1 discloses systems and methods for automatically setting up an initial configuration of a wireless client (i.e., for a first wireless client and subsequent wireless clients added to a network), including keyboard-less and (graphical user interface) GUI-less clients, and an access point without using confusing manual configuration utilities.

US 20070254614 A1 discloses secure wireless connections using ssid fields, wherein secure wireless connections can be established by broadcasting wireless security parameters within SSID fields. A wireless security parameter can be received and a broadcast SSID generated from the wireless security parameter. The broadcast SSID can be broadcast. Secure connections can be established with wireless devices that receive the broadcast SSID and connect using the broadcast SSID and the wireless security parameter. Secure wireless connections can also be established by broadcasting wireless security parameters and connection SSIDs within SSID fields. A wireless security parameter and a connection SSID can be received and a broadcast SSID generated from the wireless security parameter and connection SSID. The broadcast SSID can be broadcast. Secure connections can be established with wireless devices that receive the broadcast SSID and connect using the connection SSID and the wireless security parameter.

### SUMMARY

Embodiments of the present invention provide device association methods, and systems as defined in the claims, so as to simplify, during association between one device and another device, an operation by a user in a process of selecting the correct another device from multiple devices.

The invention is set out in the appended set of claims. The embodiments and/or examples of the following description which are not covered by the appended claims are considered as not being part of the present invention.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic flowchart of Embodiment 1 of a device association method according to the present invention;
FIG. 2 is a schematic flowchart of Embodiment 1 of another device association method according to the present invention;
FIG. 3 is a schematic flowchart of Embodiment 1 of another device association method according to the present invention;
FIG. 4 is a schematic flowchart of Embodiment 1 of another device association method according to the present invention;
FIG. 5 is a schematic structural diagram of Embodiment 1 of a device according to the present invention;
FIG. 6 is a schematic structural diagram of Embodiment 2 of a device according to the present invention;
FIG. 7 is a schematic structural diagram of Embodiment 1 of another device according to the present invention;
FIG. 8 is a schematic structural diagram of Embodiment 1 of a registrar according to the present invention;
FIG. 9 is a schematic structural diagram of Embodiment 1 of a device association system according to the present invention;
FIG. 10 is a schematic structural diagram of Embodiment 1 of another device according to the present invention;
FIG. 11 is a schematic structural diagram of Embodiment 1 of another device according to the present invention; and
FIG. 12 is a schematic structural diagram of Embodiment 1 of another registrar according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

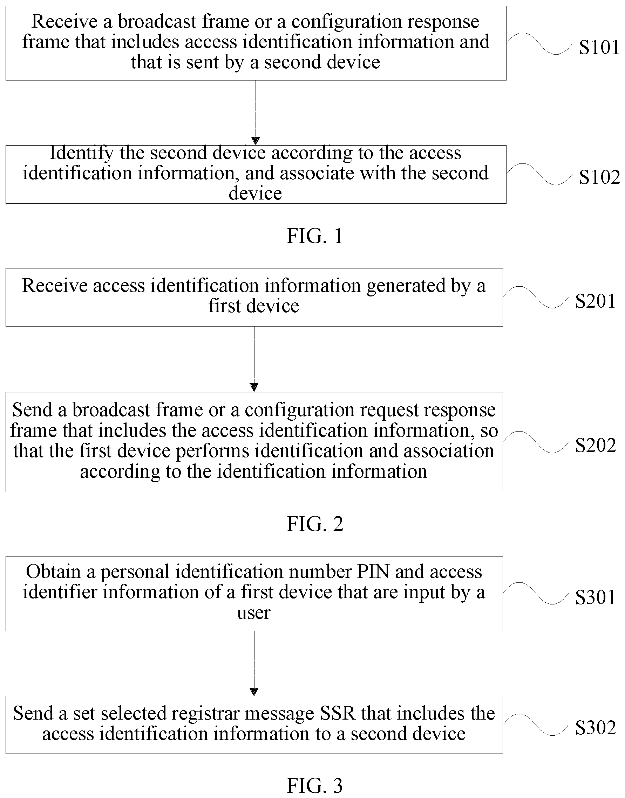

FIG. 1 is a schematic flowchart of Embodiment 1 of a device association method according to the present invention, and as shown in FIG. 1, the method includes:
S101: Receive a broadcast frame or a configuration response frame that includes access identification information and that is sent by a second device, where the access identification information is generated by a first device.
S102: Identify the second device according to the access identification information, and associate with the second device.

The access identification information is generated by the first device, read and then input into a registrar by a user, and transmitted to the second device by using the registrar. In a specific implementation process, the second device may notify the first device of the access identification information in two manners: In one manner, the access identification information is added to a broadcast frame and sent, where the broadcast frame may be a beacon frame sent in a broadcast form. In the other manner, the first device sends a configuration request to the second device, and when making a reply to the configuration request, the second device adds the access identification information to a configuration response frame.

In a specific implementation process, the device association method provided in this embodiment is specifically in two scenarios. One scenario is a scenario for associating a device in the WPS standard, and in this case, the first device may be a wireless terminal, for example, a mobile phone, a tablet computer, a personal digital assistant (Personal Digital Assistant, PDA), or a wireless printer that has a wireless function, and the second device may be an access point, for example, a wireless router. The other scenario is a scenario for associating a device in the peer-to-peer (peer-to-peer, P2P for short) standard, and in this case, the first device and the second device may both be wireless terminals. For example, the two wireless terminals may be directly interconnected (for example, Wi-Fi Direct) in a peer-to-peer (P2P) form, and in this case, the registrar may be integrated into the second device.

In the WPS standard, the registrar in this embodiment may be a registration apparatus in the WPS standard, and is configured to manage establishment of a network and addition or deletion of a wireless terminal for a WLAN on which a wireless access point (that is, the second device in this embodiment) associated with the registrar is located. In a possible implementation manner, the registrar and the second device are separately integrated into two independent devices, where the second device is a wireless access point in an infrastructure-based wireless local area network. For example, the registrar may be integrated into another external device such as a wireless terminal or a computer, and the second device may be integrated into a wireless switch, and may also be an independent device. In another possible implementation manner, the registrar is integrated into the second device, that is, is built in the second device, where the second device is a wireless access point in the infrastructure-based wireless local area network. In the two possible implementation manners, the registrar may manage the second device, and may further discover a wireless terminal that requests to associate with the second device. The first device in this embodiment is a wireless terminal that intends to associate with the second device.

The registrar and the second device in this embodiment are separately integrated into two independent devices, and the registrar may be integrated into another intelligent terminal, to implement the function of the registrar by using the intelligent terminal, so that the second device may only have a wireless access function, the design is simple, and the cost is low. The registrar in this embodiment may further be integrated into the second device, so that the second device further has the function of the registrar, and another device is not required, which makes use by the user convenient. A person skilled in the art may understand that, in a specific implementation process, a suitable implementation manner may be selected according to an actual case and respective advantages of the foregoing two implementation manners.

In the P2P standard, two wireless terminals are not connected through a wireless access point, and instead, establish a connection in a direct connection manner. Specifically, in a process of establishing an interconnection between two wireless terminals in the P2P standard, after discovering each other, the two wireless terminals perform negotiation according to respective computing capabilities, bandwidths, and whether or not having a function of a wireless access device, and finally determine one of the wireless terminals as a group owner in a non-infrastructure-based wireless local area network according to a negotiation result, and use the determined wireless signal as the second device. A person skilled in the art may understand that, in this case, the second device is the group owner in the non-infrastructure-based wireless local area network, and the other wireless terminal is a client in the non-infrastructure-based wireless local area network, and is used as the first device. A person skilled in the art may understand that, two wireless terminals may further be set to directly determine a group owner and a client. Specially, the registrar is further integrated into the second device, and the second device has the function of the registrar. In this embodiment, the second device may be the group owner in the non-infrastructure-based wireless local area network, and the first device may be the client in the non-infrastructure-based wireless local area network, so that the association method in this embodiment may also be applied in the scenario in the P2P standard.

A person skilled in the art may understand that wireless local area networks include an infrastructure-based wireless local area network and a non-infrastructure-based wireless local area network. The infrastructure-based wireless local area network specifically may refer to a wireless local area network that has a wireless access point, and the non-infrastructure-based wireless local area network specifically may refer to a wireless local area network that has no wireless access point.

It should be noted that, in the embodiment of the present invention, the access identification information may be formed by several characters such as digits or letters, and in a setting process, more characters such as digits or letters indicate a better identification effect, but input by the user becomes less convenient. The access identification information may also be one character such as a digit or a letter, and in this way, input is easy, while an identification effect is slightly less desirable. Optionally, in the embodiment of the present invention, the access identification information may be set to be of two or three characters such as digits or letters.

It should be further noted that, in the embodiment of the present invention, the access identification information may be a character such as a digit or a letter, which is independent of a personal identification number (Personal Identification Number, PIN for short) described in the following, and may also be generated by calculating the PIN in a manner, that is, generated according to the PIN. In the former case, the first device may randomly generate the access identification information that is independent of the PIN, and then the user inputs the PIN and the access identification information in the registrar; and in this case, the access identification information is independent of the PIN, and therefore security can be further improved. In the latter case, there may be two implementation manners: In one manner, the user may only need to input the PIN of the first device into the registrar, and after obtaining the PIN, the registrar generates the access identification information by using the PIN, that is, obtains the access identification information, so that the information input by the user does not increase on the basis of the existing WPS standard. In the other manner, the first device generates the access identification information by using the PIN, and then the user inputs the PIN and the access identification information in the registrar. Alternatively, the access identification information may also be obtained by making a calculation on the PIN and a small number of characters such as digits or letters that are independent of the PIN. For example, a user inputs a PIN that has eight digits and two more digits, and then a device calculates, on the basis of the ten digits by using an algorithm, access identification information that has three digits. The access identification information may be generated and obtained in multiple manners, and this is not limited in the embodiment of the present invention.

In a specific application scenario, at least one second device exists, and therefore, after receiving a broadcast frame of the at least one second device, or after sending a configuration request frame, the first device receives a configuration response frame sent by the at least one second device for the configuration request frame, and then by comparing the access identification information included in the received broadcast frame or configuration response frame with the access identification information generated by the first device, the first device filters the at least one received broadcast frame or configuration response frame, so as to identify a matched second device required by the first device, and further associate (Association) with the second device, so that the first device finally obtains a credential (Credential) for joining a wireless local area network in which the second device is located.

In the embodiment of the present invention, by using the access identification information, the first device can very easily identify a matched second device required by the first device, and then may directly perform an operation of associating with the second device, thereby avoiding a process for a user to make a selection from a list that includes information about multiple devices, also simplifying a process for the first device to join the WLAN in which the second device is located, making an operation by the user simpler, and improving user experience.

It should be noted that, before receiving the broadcast frame or the configuration response frame that includes the access identification information generated by the first device and is sent by the second device, the first device generates the access identification information, so that the access identification information is input into the second device, where this case indicates that the registrar is integrated into the second device; or, so that after the access identification information is input into the registrar, the registrar sends the access identification information input by the user to the second device, and then the second device may add the access identification information to a broadcast frame or a configuration response frame that needs to be sent, so that the first device determines, according to the received broadcast frame or configuration response frame, whether the second device is the second device required by the first device.

More specifically, in an embodiment of the present invention, the first device may randomly generate the access identification information, and may also generate the access identification information according to a rule, for example, generate the access identification information according to the personal identification number PIN, where the PIN may be a dynamic PIN or a static PIN, where the dynamic PIN may be randomly generated by the first device every time, and the static PIN may be provided on a device label of the first device by a manufacturer upon delivery of the first device.

Therefore, two cases exist for the generation of the access identification information: In one case, the access identification information is generated when the first device dynamically generates the PIN. In the other case, when the static PIN exists, the access identification information is independently generated.

In addition, after successfully associating with the second device, the first device further executes a process of an Extensible Authentication Protocol (Extensible Authentication Protocol, EAP for short) verification with the second device and the registrar to verify whether a PIN number is correct, receives the credential sent by the second device after the EAP verification succeeds, and joins, according to the credential, the wireless local area network WLAN in which the second device is located, where the credential may be generated by the registrar, and then forwarded by the second device. Specifically, after obtaining the credential, the first device may further send a reply message to the second device, and then the first device has obtained a configuration performed by the second device on the first device and the first device may join the WLAN in which the second device is located.

In the embodiment of the present invention, a first device can very easily identify, according to access identification information generated by the first device, a second device to which the first device intends to be connected, and then may directly perform an operation of associating with the second device, thereby avoiding a process for a user to make a selection from a list that includes information about multiple devices, and next the first device may join, according to an obtained credential, a WLAN in which the second device is located, also simplifying a process for the first device to join the WLAN in which the second device is located, making an operation by the user simpler, simplifying the operation by the user, and improving user experience.

FIG. 2 is a schematic flowchart of Embodiment 1 of another device association method according to the present invention, and as shown in FIG. 2, the method includes:
S201: Receive access identification information generated by a first device. In a specific implementation process, the access identification information generated by the first device and input by a user may be received; or a set selected registrar message (Set selected registrar, SSR for short) that includes the access identification information and that is sent by a registrar may be received, where the access identification information is generated by the first device and is input by the user into the access identification information of the registrar.
S202: Send a broadcast frame or a configuration response frame that includes the access identification information, so that the first device performs identification and association according to the access identification information.

More specifically, the access identification information is generated by the first device, and may be input by the user into the registrar, the registrar adds the access identification information to the SSR and sends the SSR to the second device, and the second device may add the access identification information to a broadcast frame and send the broadcast frame in a broadcast form, so that the first device can receive the broadcast frame. Alternatively, if the second device receives a configuration request frame sent by the first device, the second device may add the access identification information to the configuration response frame and send the configuration response frame to the first device. By comparing the access identification information included in at least one received broadcast frame or configuration response frame with the access identification information generated by the first device, the first device filters the at least one received broadcast frame or configuration response frame including the access identification information, so as to identify a matched second device required by the first device and further directly associate with the second device.

In a specific implementation process, after the second device has successfully associated with the first device, the first device may further execute a process of an EAP verification with the second device and the registrar, to verify whether a PIN number is correct. Specifically, in an embodiment, after the EAP verification succeeds, the second device sends a credential to the first device, so that the first device may join, according to the credential, the wireless local area network WLAN in which the second device is located. In a specific implementation process, the second device may receive the credential sent by the registrar first, and then send the credential to the first device. In the embodiment of the present invention, by determining, according to access identification information generated by a first device, access identification information included in a broadcast frame or a configuration response frame sent by a second device, the first device very easily identifies a matched second device, and then may directly associate with the second device, and join a WLAN in which the second device is located, thereby avoiding a process for a user to make a selection from multiple second devices, also simplifying a process for the first device to join the WLAN in which the second device is located, and making an operation by the user simpler. FIG. 3 is a schematic flowchart of Embodiment 1 of another device association method according to the present invention, and as shown in FIG. 3, the method includes:
S301: Obtain a personal identification number PIN and access identification information that are of a first device and input by a user, where the access identification information is generated by the first device.
S302: Send a set selected registrar message SSR that includes the access identification information to a second device, so that the second device sends a broadcast frame or a configuration response frame that includes the access identification information to the first device, and the first device identifies the second device according to the access identification information and associates with the second device.

Specifically, a user may input, into a registrar, the access identification information generated by the first device and a dynamic PIN that is generated at the same time or a static PIN that already exists, where an input sequence is not limited, and the access identification information may be input before or after the PIN is input. By using input of 10 digits as an example, the first 8 digits may be used as the PIN, and the last 2 digits may be used as the access identification information. The 10 digits may be input at a time, or the first 8 digits and the last 2 digits may also be input separately at two times. In addition, only the PIN may be input into the registrar, and the registrar generates the access identification information according to the input PIN, that is, obtains the access identification information. The registrar adds the access identification information to the set selected registrar message SSR that is to be sent to the second device, and after receiving the SSR, the second device adds the access identification information in the SSR to a broadcast frame or a configuration response frame and sends the broadcast frame or the configuration response frame to the first device. In a specific implementation process, one attribute (Attribute) that indicates the access identification information may be added to a WSC information element (Information Element, IE for short), and then the WSC may be added to the SSR sent by the registrar and the broadcast frame or the configuration response frame sent by the second device. After the first device receives at least one broadcast frame or configuration response frame that includes the access identification information, by comparing the access identification information included in the at least one received broadcast frame or configuration response frame with the access identification information generated by the first device, the first device filters the at least one received broadcast frame or configuration response frame including the access identification information, so as to identify the second device that is required by the first device and has the matching access identification information, and further associate with the second device.

After the second device has successfully associated with the first device, the first device further executes a process of an EAP verification with the second device and the registrar, to verify whether a PIN number is correct. After the EAP verification succeeds, the registrar sends a credential to the second device, so that the second device sends the credential to the first device, and the first device joins, according to the credential, a wireless local area network WLAN in which the second device is located. The credential sent by the registrar may be generated by the registrar according to the PIN input by the user.

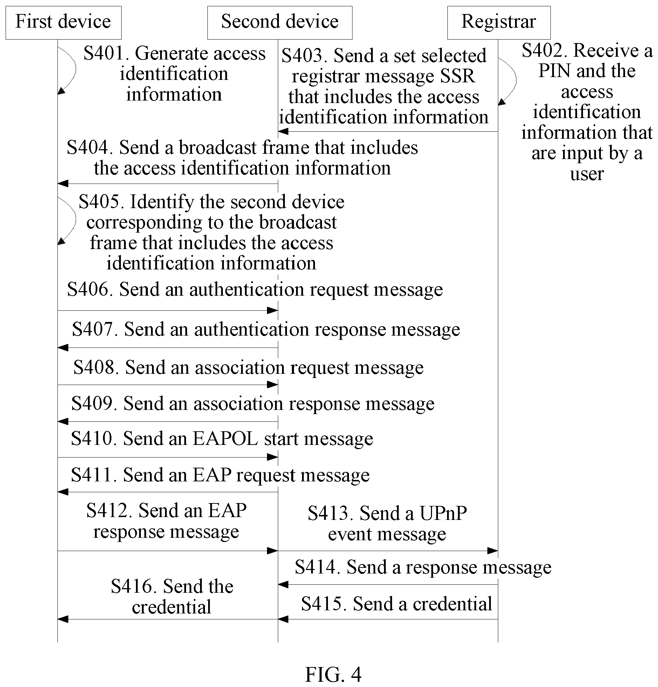

In the embodiment of the present invention, a user inputs access identification information generated by a first device into a registrar, and the registrar sends an SSR that includes the access identification information to a second device, so that the second device sends a broadcast frame or a configuration response frame that includes the access identification information to the first device, and the first device very easily identifies a matched second device according to the access identification information, and further may directly associate with the second device, thereby avoiding a process for the user to select a second device required by the first device from multiple second devices found through scanning or searching, also simplifying a process for the first device to join a WLAN in which the second device is located, and making an operation by the user simpler. FIG. 4 is a schematic flowchart of Embodiment 1 of another device association method according to the present invention, and as shown in FIG. 4, on the basis of the device association method shown in FIG. 1 to FIG. 3, in a scenario in which a first device receives a broadcast frame sent by a second device, an entire work procedure in the embodiment of the present invention is as follows: S401: A first device generates access identification information.

Specifically, the first device may generate the access identification information according to a personal identification number PIN. The PIN may be a dynamic PIN, and may also be a static PIN. If the dynamic PIN is used, when the dynamic PIN is generated, the access identification information may be generated according to the PIN at the same time.
S402: A registrar receives a PIN and the access identification information that are input by a user. It should be noted that, in a specific implementation process, optionally, if the user does not input the PIN and the generated access identification information into the registrar within a time range, the access identification information may be considered expired and needs to be generated again. If a dynamic PIN is used, the dynamic PIN also expires, and needs to be generated again together with the access identification information.
S403: The registrar sends a set selected registrar message SSR that includes the access identification information to a second device.
S404: The second device sends a broadcast frame that includes the access identification information to the first device.
S405: In at least one received broadcast frame, the first device identifies, according to the access identification information generated by the first device, a second device corresponding to the broadcast frame that includes the access identification information.
S406: The first device sends an authentication request message to the second device.
S407: The second device sends an authentication response message to the first device.
S408: The first device sends an association request message to the second device.
S409: The second device sends an association response message to the first device, that is, the first device associates with the second device successfully.
S410: The first device sends an EAPOL (Extensible Authentication Protocol Over Lan, EAPOL for short, Extensible Authentication Protocol Over Lan) start message to the second device. S411: The second device sends an EAP (Extensible Authentication Protocol, EAP for short, Extensible Authentication Protocol) request message to the first device.
S412: The first device sends an EAP response message to the second device.
S413: The second device sends a Universal Plug-n-Play (Universal Plug-n-Play, UPnP for short) event message to the registrar.
S414: The registrar sends a response message to the second device.

It should be noted that, after the first device associates with the second device successfully, a process of an EAP verification is executed between the first device, the second device, and the registrar, and S410 to S414 are content of the specific process of EAP verification; however, the present invention is not limited thereto. After the EAP verification succeeds, the registrar sends a credential to the second device, and then the second device sends the credential to the first device. S415: The registrar sends a credential to the second device. The credential may also be included in the response message sent by the registrar to the second device.
S416: The second device sends the credential to the first device. The credential may be included in one piece of EAP request information, and sent by the second device to the first device.

After receiving the credential, the first device associates with the second device again, and then may join a WLAN in which the second device is located.

In a scenario in which the first device sends a configuration request to the second device, S404 may be replaced with that, the first device sends a configuration request to at least one second device, and after receiving the configuration request, the at least one second device sends a configuration response frame to the first device, where after receiving the configuration request, the correct second device sends a configuration response frame that includes the access identification information to the first device. Next, S405 is replaced with that, in the received at least one configuration response frame, the first device identifies, according to the access identification information generated by the first device, the second device corresponding to the configuration response frame that includes the access identification information.

It should be noted that, in a specific implementation process, the entire process may be triggered by the registrar, and may also be triggered by the first device. In other words, the registrar may first activate a PIN configuration manner, and the first device may also first activate the PIN configuration manner. However, this is only a difference in an operation sequence of a user and does not affect the foregoing entire process.

In addition, in an actual application process, the second device and the registrar may also be integrated into one network side device, for example, one device such as a wireless router or a mobile phone that has an input interface, which; however, the present invention is not limited thereto. In this case, the registrar may be understood as one functional entity integrated into the second device, and the registrar is built in the second device.

If the first device identifies at least two broadcast frames or configuration response frames that include same access identification information, the first device may sequentially associate with second devices corresponding to the at least two broadcast frames or configuration response frames, and perform a subsequent verification in the prior art, but the probability is relatively low. By using one random two-digit number between 0 and 99, the probability of two second devices having same access identification information is about 1/10000. Especially, if it is set that generated access identification information expires if the access identification information is not input into the registrar after a period of time, the probability becomes even lower.

In the embodiment of the present invention, a first device generates access identification information, and the access identification information is input into a registrar and sent to a second device, so that a broadcast frame broadcast by the second device includes the access identification information, and the first device very easily finds a matched second device according to the access identification information, and directly associates with the second device, thereby avoiding a process for a user to make a selection from multiple second devices, also simplifying a process for the first device to join the WLAN in which the second device is located, and making an operation by the user simpler.

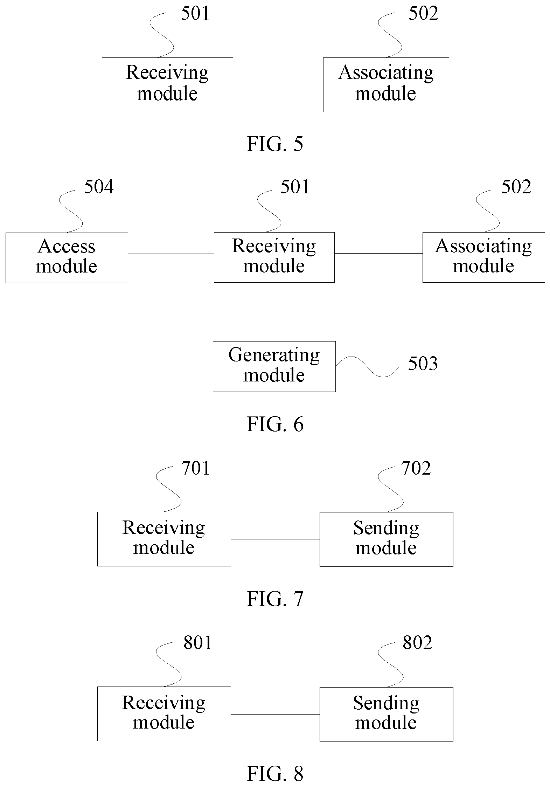

FIG. 5 is a schematic structural diagram of Embodiment 1 of a device according to the present invention, and as shown in FIG. 5, the device corresponds to the first device, and specifically includes a receiving module 501 and an associating module 502, where:
the receiving module 501 is configured to receive a broadcast frame or a configuration response frame that includes access identification information generated by the first device and that is sent by a second device; and
the associating module 502 is configured to identify the second device according to the access identification information, and associate with the second device.

For work of the foregoing modules, refer to the method embodiment shown in FIG. 1, and details are not described herein again.

In the embodiment of the present invention, access identification information that is included in a broadcast frame or a configuration response frame received by a receiving module is generated by a first device, and then is input into a registrar and sent to a second device by a user, and therefore an associating module of the first device very easily identifies the corresponding second device according to the access identification information, and performs association, thereby avoiding a process for the user to make a selection from multiple second devices, also simplifying a process for the first device to join the WLAN in which the second device is located, making an operation by the user simpler, and saving time of the user.

FIG. 6 is a schematic structural diagram of Embodiment 2 of a device according to the present invention, and as shown in FIG. 6, on the basis of FIG. 5, the first device further includes: a generating module 503 and an access module 504, where:
the generating module 503 is configured to generate the access identification information, so that the access identification information is input into the second device, or the access identification information is input into a registrar and then the registrar sends the access identification information to the second device; and therefore, the second device sends the broadcast frame or the configuration response frame that includes the access identification information to the first device.

More specifically, the generating module 503 is configured to randomly generate the access identification information, or generate the access identification information according to a personal identification number PIN.

In addition, the receiving module 501 is further configured to receive a credential sent by the second device; and
the access module 504 is configured to: after the first device associates with the second device, join, according to the credential, a wireless local area network in which the second device is located.

For work processes of the foregoing modules, refer to the method embodiment shown in FIG. 1, and details are not described herein again.

In the embodiment of the present invention, a generating module of a first device generates access identification information, a user reads and then inputs the access identification information into a registrar, and sends the access identification information to a second device, and therefore an associating module of the first device very easily identifies the corresponding second device according to the access identification information, and performs association, thereby avoiding a process for the user to make a selection from multiple second devices, and after the association succeeds, the first device may join, according to a received credential, a WLAN in which the second device is located, thereby also simplifying a process for the first device to join the WLAN in which the second device is located, making an operation by the user simpler, and saving time of the user.

FIG. 7 is a schematic structural diagram of Embodiment 1 of another device according to the present invention, and as shown in FIG. 7, the second device includes: a receiving module 701 and a sending module 702, where,
the receiving module 701 is configured to receive access identification information generated by a first device; and
the sending module 702 is configured to send a broadcast frame or a configuration response frame that includes the access identification information, so that the first device identifies the second device according to the access identification information and associates with the second device.

Further, the receiving module 701 is specifically configured to receive the access identification information generated by the first device and input by a user; or specifically configured to receive a set selected registrar message SSR that includes the access identification information and that is sent by a registrar, where the access identification information is generated by the first device and is input by the user into the access identification information of the registrar.

In a specific implementation process, the sending module 702 is further configured to send a credential to the first device, so that the first device joins, according to the credential, a wireless local area network in which the second device is located. It should be noted that, in an implementation manner, the credential specifically is a credential sent by the registrar, and the receiving module is further configured to: after the sending module sends the broadcast frame or the configuration response frame that includes the access identification information, receive the credential sent by the registrar.

For work processes of the foregoing modules, refer to the method embodiment shown in FIG. 2, and details are not described herein again.

In the embodiment of the present invention, access identification information included in a broadcast frame or a configuration response frame sent by a second device is initially generated and input into a registrar by a first device, and therefore the first device very easily identifies the corresponding second device according to the access identification information, and performs association, thereby avoiding a process for the user to make a selection from multiple second devices, and after the association succeeds, the first device may join, according to a received credential, a WLAN in which the second device is located, thereby also simplifying a process for the first device to join the WLAN in which the second device is located, making an operation by the user simpler, and saving time of the user.

FIG. 8 is a schematic structural diagram of Embodiment 1 of a registrar according to the present invention, and as shown in FIG. 8, the registrar includes: a receiving module 801 and a sending module 802, where,
the receiving module 801 is configured to receive a personal identification number PIN and access identification information that are input by a user, where the access identification information is generated by a first device; and
the sending module 802 is configured to send a set selected registrar message SSR that includes the access identification information to a second device, so that the second device sends a broadcast frame or a configuration response frame that includes the access identification information to the first device, and the first device identifies the second device according to the access identification information and associates with the second device.

In a specific implementation process, after the second device has successfully associated with the first device, the sending module 802 is further configured to send a credential to the second device, so that the second device sends the credential to the first device, and the first device joins, according to the credential, a wireless local area network in which the second device is located. For work processes of the foregoing modules, reference may be made to the method embodiment shown in FIG. 2, and details are not described herein again.

In the embodiment of the present invention, a user inputs access identification information generated by a first device into a registrar, the registrar sends the access identification information to a second device, the second device broadcasts the access identification information or adds the access identification information to a configuration response frame and returns the configuration response frame to the first device, and the first device very easily identifies the corresponding second device according to the received access identification information, and performs association, thereby avoiding a process for the user to make a selection from multiple second devices, and after the association succeeds, the first device may join, according to a received credential, a WLAN in which the second device is located, thereby also simplifying a process for the first device to join the WLAN in which the second device is located, making an operation by the user simpler, and saving time of the user.

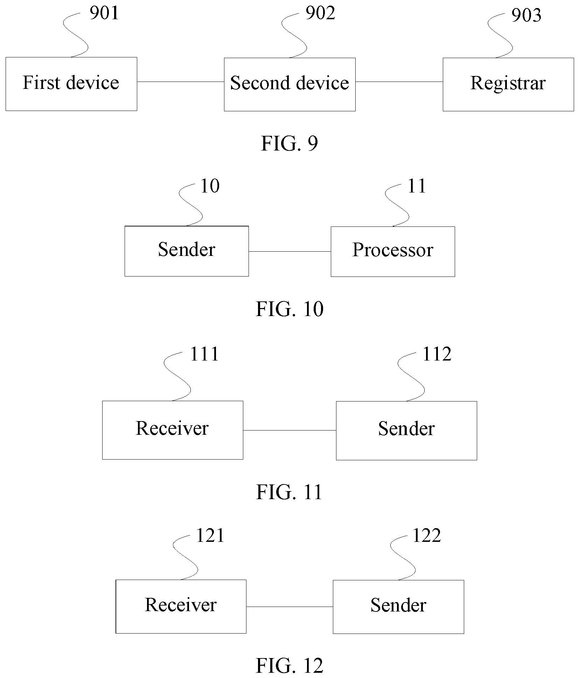

FIG. 9 is a schematic structural diagram of Embodiment 1 of a device association system according to the present invention, and as shown in FIG. 9, the system includes: a first device 901, a second device 902, and a registrar 903, where the first device 901 is the device shown in FIG. 5 and FIG. 6, the second device 902 is the device shown in FIG. 7, the registrar 903 is the registrar shown in FIG. 8, their specific work processes are described in the foregoing, and details are not described herein again.

In the embodiment of the present invention, a first device generates access identification information, and the access identification information is input into a registrar and sent to a second device, so that a broadcast frame or a configuration response frame sent by the second device includes the access identification information, and the first device very easily finds a matched second device according to the access identification information, and directly associates with the second device, thereby avoiding a process for a user to select a second device from multiple second devices, also simplifying a process for a wireless terminal to join a WLAN in which the second device is located, and making an operation by the user simpler.

FIG. 10 is a schematic structural diagram of Embodiment 1 of another device according to the present invention, and as shown in FIG. 10, the device corresponds to the first device, and specifically includes: a receiver 10 and at least one processor 11, where:
the receiver 10 is configured to receive a broadcast frame or a configuration response frame that includes access identification information generated by the first device and that is sent by a second device; and
the processor 11 is configured to identify the second device according to the access identification information, and associate with the second device.

Further, the processor 11 is further configured to generate the access identification information, so that the access identification information is input into the second device, or the access identification information is input into a registrar and then the registrar sends the access identification information to the second device; and therefore, the second device sends the broadcast frame or the configuration response frame that includes the access identification information to the first device.

The processor 11 is specifically configured to randomly generate the access identification information or generate the access identification information according to a personal identification number PIN.

In addition, the receiver 10 is further configured to: after the first device associates with the second device, receive a credential sent by the second device; and the processor 11 is further configured to join, according to the credential, a wireless local area network in which the second device is located.

The device provided in this embodiment may be configured to execute a procedure of the method embodiment shown in FIG. 1 or FIG. 4, and for its specific operating principle, details are not described again, and refer to description of the method embodiment for details.

FIG. 11 is a schematic structural diagram of Embodiment 1 of another device according to the present invention, and as shown in FIG. 11, the device corresponds to the second device, and specifically includes a receiver 111 and a sender 112, where:
the receiver 111 is configured to receive access identification information generated by a first device; and
the sender 112 is configured to send a broadcast frame or a configuration response frame that includes the access identification information, so that the first device identifies the second device according to the access identification information and associates with the second device.

The receiver 111 is specifically configured to receive the access identification information generated by the first device and input by a user; or specifically configured to receive a set selected registrar message SSR that includes the access identification information and that is sent by a registrar, where the access identification information is access identification information that is generated by the first device and is input by the user into the registrar.

Further, the sender 112 is further configured to send a credential to the first device, so that the first device joins, according to the credential, a wireless local area network in which the second device is located. It should be noted that, in an implementation manner, the credential specifically is a credential sent by the registrar, and the receiving module is further configured to: after the sending module sends the broadcast frame or the configuration response frame that includes the access identification information, receive the credential sent by the registrar.

The device provided in this embodiment may be configured to execute a procedure of the method embodiment shown in FIG. 2 or FIG. 4, and for its specific operating principle, details are not described again, and refer to description of the method embodiment for details.

FIG. 12 is a schematic structural diagram of Embodiment 1 of another registrar according to the present invention, and as shown in FIG. 12, the registrar includes: a receiver 121 and a sender 122, where:
the receiver 121 is configured to receive a personal identification number PIN and access identification information that are input by a user, where the access identification information is generated by a first device; and
the sender 122 is configured to send a set selected registrar message SSR that includes the access identification information to a second device, so that the second device sends a broadcast frame or a configuration response frame that includes the access identification information to the first device, and the first device identifies the second device according to the access identification information and associates with the second device.

Further, the sender 122 is further configured to send a credential to the second device, so that the second device sends the credential to the first device, and the first device joins, according to the credential, a wireless local area network in which the second device is located.

It should be noted that, in the embodiment of the present invention, the registrar may be a functional entity, and in an actual application process, the second device and the registrar may also be integrated into one network side device, for example, one device such as a wireless router or a mobile phone that has an input interface, which, however, is not limited thereto. In this case, the registrar may be understood as one functional entity integrated into the second device, and the registrar is built in the second device.

The registrar provided in this embodiment may be configured to execute a procedure of the method embodiment shown in FIG. 3 or FIG. 4, and for its specific operating principle, details are not described again. For details, refer to description of the method embodiment.

It should be noted that, in the foregoing specific embodiments, the implementation processes of the present invention are described according to a network architectures involving three roles, where the first device may be an application terminal that intends to acquire a configuration, the second device may be an access point, the registrar may be a third party device connected to the access point, and the registrar and the access point may communicate with each other in another wireless or wired manner such as a Wi-Fi network or an Ethernet. Actually, the registrar may also be located inside the access point, the user may perform an operation by using one third party device as an input/output interface of the registrar, and in this case, the third party device is connected to the access point in a wired manner. If the registrar is located inside the access point, in the embodiments, the messages between the registrar and the second device may be not required. In another case, the second device and the first device may both be application terminals, the operations on the registrar may actually all be implemented on the second device, the messages between the registrar and the second device are also not required, and in this case, the second device may have already established a wireless local area network with another application terminal, and also may have not established a wireless local area network with another application terminal. In a case in which the second device has not established a wireless local area network with another application terminal, the second device may also be considered as one wireless local area network, and then that the first device joins the wireless local area network in which the second device is located is essentially that the first device and the second device establish a connection and set up a wireless local area network.

It should be further noted that, in the foregoing specific embodiments, when the first device sends the configuration request frame, the access identification information generated by the first device may be included in the configuration request frame, so that after obtaining the access identification information, the second device may determine whether to respond to the received configuration request frame according to the access identification information in the configuration request frame, whether the second device previously obtains the access identification information input by the user or sent by the registrar, and specific content of the obtained access identification information. If the two (the access identification information in the configuration request frame and the previously obtained access identification information) match each other, the second device returns a configuration response frame; otherwise, may skip responding, and further, may further add the obtained access identification information to the configuration response frame. This can prevent the second device from sending an invalid configuration response frame, and can also help to accelerate a configuration and connection process for the first device and the second device. The broadcast frame in the present invention may be a beacon frame (Beacon) defined in existing Wi-Fi standards, the configuration request frame may be a probe request (probe request) frame, and the configuration response frame may be a probe response (probe response) frame.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A device association method performed in a first device (901) and a second device (902), comprising:
receiving, by the second device (902), access identification information of a first device (901), wherein the second device (902) is a wireless access device with which the first device (901) intends to associate, wherein the access identification information is generated by the first device (901) so that the access identification information is readable to a user and wherein the access identification information is input by the user into the second device (902), wherein the access identification information specifically is generated randomly by the first device (901), or is generated by the first device (901) according to a personal identification number PIN of the first device (901);
sending, by the second device (902), a broadcast frame or a configuration response frame that includes the access identification information;
receiving, by the first device (901), the broadcast frame or the configuration response frame that comprises the access identification information of the first device (901) identifying, by the first device (901), the second device (902) according to the access identification information, and associating with the second device (902).

2. A device association method performed in a first device (901), a second device (902) and a registrar (903), comprising:
obtaining, by the registrar (903), access identification information of a first device (901), wherein the access identification information is generated by the first device (901) so that the access identification information is readable to a user and wherein the access identification information is input by the user into the registrar (903), wherein the access identification information specifically is generated randomly by the first device (901), or is generated by the first device (901) according to a personal identification number PIN of the first device (901); and
sending, by the registrar (903), the access identification information to the second device (902) associated with the registrar (903),
receiving, by the second device (902), the access identification information of the first device (901), wherein the second device (902) is a wireless access device with which the first device (901) intends to associate; and
sending, by the second device (902), a broadcast frame or a configuration response frame that includes the access identification information;
receiving, by the first device (901), the broadcast frame or the configuration response frame that comprises the access identification information of the first device (901); and
identifying, by the first device (901), the second device (902) according to the access identification information, and associating with the second device (902).

3. The method according to claim 1 or 2, wherein after the associating with the second device (902), the method further comprises:
sending, by the second device (901), a credential to the first device (901); and
receiving, by the first device (901), a credential sent by the second device (902); and joining, according to the credential, a wireless local area network in which the second device (902) is located.

4. The method according to claim 3 in its reference to claim 2, wherein the sending the credential to the first device (901) comprises:
sending, by the registrar (903), the credential to the second device (902); and
receiving the credential sent by the registrar (903), and sending the credential to the first device (901).

5. A system, comprising a first device (901) and a second device (902), wherein the second device (902) comprises:
a receiving module (701), configured to receive access identification information of the first device (901), wherein the second device (902) is a wireless access device with which the first device (901) intends to associate, wherein the access identification information is generated by the first device (901) so that the access identification information is readable to a user and wherein the access identification information is input by the user into the second device (902); and
a sending module (702), configured to send a broadcast frame or a configuration response frame that includes the access identification information;
wherein the first device (901s) comprises:
a receiving module (501), configured to receive the broadcast frame or the configuration response frame that comprises the access identification information of the first device (901); and
an associating module (502), configured to identify the second device (902) according to the access identification information, and associate with the second device (902);
wherein the first device (901) further comprises:
a generating module (503), configured to generate the access identification information, and specifically configured to randomly generate the access identification information or generate the access identification information according to a personal identification number PIN of the first device (901).

6. A system comprising a first device (901), a second device (902) and a registrar (903), wherein the registrar (903) comprises:
a receiving module (801), configured to receive an access identification information that is of the first device (901), wherein the access identification information is generated by the first device (901) so that the access identification information is readable to a user and wherein the access identification information is input by the user into the registrar (903); and
a sending module (802), configured to send the access identification information to the second device (902) associated with the registrar (903), wherein the second device (902) is a wireless access device with which the first device (901) intends to associate;
wherein the second device (902) comprises:
a receiving module (701), configured to receive the access identification information of the first device (901); and
a sending module (702), configured to send a broadcast frame or a configuration response frame that includes the access identification information;
wherein the first device (901) comprises:
a receiving module (501), configured to receive the broadcast frame or the configuration response frame that comprises the access identification information of the first device (901); and
an associating module (502), configured to identify the second device (902) according to the access identification information, and associate with the second device (902)
wherein the first device (901) further comprises:
a generating module (503), configured to generate the access identification information, and specifically configured to randomly generate the access identification information or generate the access identification information according to a personal identification number PIN of the first device (901).

7. The system according to claim 5 or 6, wherein the sending module of the second device (902) is further configured to send a credential to the first device (901),
wherein the receiving module of the first device (901) is further configured to: after the first device (901) associates with the second device (902), receive the credential sent by the second device (902); and
the first device (901) further comprises:
an access module (504), configured to join, according to the credential, a wireless local area network in which the second device is located.

8. The device according to claim 7 in its reference to claim 6, wherein the sending module of the registrar (903) is further configured to send the credential to the second device (902), and the receiving module of the second device (902) is further configured to: after the sending module sends the broadcast frame or the configuration response frame that includes the access identification information, receive the credential sent by the registrar (903).

## Patentansprüche

1. Vorrichtungszuordnungsverfahren, das in einer ersten Vorrichtung (901) und einer zweiten Vorrichtung (902) ausgeführt wird, umfassend:
Empfangen von Zugangsidentifikationsinformationen einer ersten Vorrichtung (901) durch die zweite Vorrichtung (902), wobei die zweite Vorrichtung (902) eine drahtlose Zugangsvorrichtung ist, die der erste Vorrichtung zugeordnet werden soll, wobei die Zugangsidentifikationsinformationen durch die erste Vorrichtung (901) generiert werden, so dass die Zugangsidentifikationsinformationen für einen Nutzer lesbar sind, und wobei die Zugangsidentifikationsinformationen durch den Nutzer in die zweite Vorrichtung (902) eingegeben werden, wobei die Zugangsidentifikationsinformationen spezifisch statistisch durch die erste Vorrichtungen (901) generiert werden oder durch die erste Vorrichtung (901) gemäß einer persönlichen Identifikationsnummer PIN der ersten Vorrichtung (901) generiert werden;
Senden eines "Broadcast-Frames" oder eines Konfigurationsantwort-Frames, der die Zugangsidentifikationsinformationen einschließt, durch die zweite Vorrichtung (902);
Empfangen des "Broadcast-Frames" oder des Konfigurationsantwort-Frames, der die Zugangsidentifikationsinformationen der ersten Vorrichtung (901) umfasst, durch die erste Vorrichtung (901), wodurch die zweite Vorrichtung (902) gemäß den Zugangsidentifikationsinformationen durch die erste Vorrichtung (901) identifiziert wird, und Zuordnen der zweiten Vorrichtung (902).

2. Vorrichtungszuordnungsverfahren, das in einer ersten Vorrichtung (901), einer zweiten Vorrichtung (902) und einem Registrar (903) ausgeführt wird, umfassend:
Erhalten von Zugangsidentifikationsinformationen einer ersten Vorrichtung (901) durch den Registrar (903), wobei die Zugangsidentifikationsinformationen durch die erste Vorrichtung (901) generiert werden, so dass die Zugangsidentifikationsinformationen für einen Nutzer lesbar sind, und wobei die Zugangsidentifikationsinformationen durch den Nutzer in den Registrar (903) eingegeben werden, wobei die Zugangsidentifikationsinformationen spezifisch statistisch durch die erste Vorrichtung (901) generiert werden oder durch die erste Vorrichtung (901) gemäß einer persönlichen Identifikationsnummer PIN der ersten Vorrichtung (901) generiert werden; und
Senden der Zugangsidentifikationsinformationen an die zweite Vorrichtung, die dem Registrar (903) zugeordnet ist, durch den Registrar (903),
Empfangen der Zugangsidentifikationsinformationen der ersten Vorrichtung (901) durch die zweite Vorrichtung (902), wobei die zweite Vorrichtung (902) eine Drahtloszugangsvorrichtung ist, der die erste Vorrichtung (901) zugeordnet werden soll; und
Senden eines "Broadcast-Frames" oder eines Konfigurationsantwort-Frames, der die Zugangsidentifikationsinformationen einschließt, durch die zweite Vorrichtung (902);
Empfangen des "Broadcast-Frames" oder des Konfigurationsantwort-Frames, der die Zugangsidentifikationsinformationen der ersten Vorrichtung (901) umfasst, durch die erste Vorrichtung (901); und
Identifizieren der zweiten Vorrichtung (902) gemäß den Zugangsidentifikationsinformationen durch die erste Vorrichtung (901) und Zuordnen der zweiten Vorrichtung (902).

3. Verfahren nach Anspruch 1 oder 2, wobei das Verfahren nach dem Zuordnen der zweiten Vorrichtung (902) ferner umfasst:
Senden von Anmeldeinformationen an die erste Vorrichtung (901) durch die zweite Vorrichtung (901); und
Empfangen von Anmeldeinformationen, die von der zweiten Vorrichtung (902) gesendet wurden, durch die erste Vorrichtung (901) und Eintreten in ein drahtloses lokales Netzwerk (LAN), in dem sich die zweite Vorrichtung (902) befindet, gemäß den Anmeldeinformationen.

4. Verfahren nach Anspruch 3 in Bezug auf Anspruch 2, wobei das Senden der Anmeldeinformationen an die erste Vorrichtung (901) umfasst:
Senden der Anmeldeinformationen an die zweite Vorrichtung (902) durch den Registrar (903); und
Empfangen der von dem Registrar (903) gesendeten Anmeldeinformationen, und Senden der Anmeldeinformationen an die erste Vorrichtung (901).

5. System, umfassend eine erste Vorrichtung (901) und eine zweite Vorrichtung (902), wobei die zweite Vorrichtung (902) umfasst:
ein Empfangsmodul (701), das konfiguriert ist, um Zugangsidentifikationsinformationen der ersten Vorrichtung (901) zu empfangen, wobei die zweite Vorrichtung (902) eine Drahtloszugangsvorrichtung ist, die der ersten Vorrichtung (901) zugeordnet werden soll, wobei die Zugangsidentifikationsinformationen durch die erste Vorrichtung (901) generiert werden, so dass die Zugangsidentifikationsinformationen für einen Nutzer lesbar sind, und wobei die Zugangsidentifikationsinformationen durch den Nutzer in die zweite Vorrichtung (902) eingegeben werden; und
ein Sendemodul (702), das konfiguriert ist, um einen "Broadcast-Frame" oder einen Konfigurationsantwort-Frame zu senden, der die Zugangsidentifikationsinformationen einschließt;
wobei die erste Vorrichtung (901s) umfasst:
ein Empfangsmodul (501), das konfiguriert ist, um den "Broadcast-Frame" oder den Konfigurationsantwort-Frame zu empfangen, der die Zugangsidentifikationsinformation der ersten Vorrichtung (901) umfasst; und
ein Zuordnungsmodul (502), das konfiguriert ist, um die zweite Vorrichtung (902) gemäß den Zugangsidentifikationsinformationen zu identifizieren und die Zuordnung der zweiten Vorrichtung (902) durchzuführen;
wobei die erste Vorrichtung (901) weiter umfasst:
ein Generierungsmodul (503), das konfiguriert ist, um die Zugangsidentifikationsinformationen zu generieren, und spezifisch konfiguriert ist, um die Zugangsidentifikationsinformationen statistisch zu generieren oder die Zugangsidentifikationsinformationen gemäß einer persönlichen Identifikationsnummer PIN der ersten Vorrichtung (901) zu generieren.

6. System, umfassend eine erste Vorrichtung (901), eine zweite Vorrichtung (902) und einen Registrar (903), wobei der Registrar (903) umfasst:
ein Empfangsmodul (801), das konfiguriert ist, um Zugangsidentifikationsinformationen zu empfangen, die von der ersten Vorrichtung (901) sind, wobei die Zugangsidentifikationsinformationen durch die erste Vorrichtung (901) generiert werden, so dass die Zugangsidentifikationsinformationen für einen Nutzer lesbar sind, und wobei die Zugangsidentifikationsinformationen durch den Nutzer in den Registrar (903) eingegeben werden; und
ein Sendemodul (802), das konfiguriert ist, um die Zugangsidentifikationsinformationen an die zweite Vorrichtung (902) zu senden, die dem Registrat (903) zugeordnet ist, wobei die zweite Vorrichtung (902) eine Drahtloszugangsvorrichtung ist, die der ersten Vorrichtung (901) zugeordnet werden soll;
wobei die zweite Vorrichtung (902) umfasst:
ein Empfangsmodul (701), das konfiguriert ist, um die Zugangsidentifikationsinformationen der ersten Vorrichtung (901) zu empfangen; und
ein Sendemodul (702), das konfiguriert ist, um einen "Broadcast-Frame" oder einen Konfigurationsantwort-Frame zu senden, der die Zugangsidentifikationsinformationen einschließt;
wobei die erste Vorrichtung (901) umfasst:
ein Empfangsmodul (501), das konfiguriert ist, um den "Broadcast-Frame" oder den Konfigurationsantwort-Frame zu empfangen, der die Zugangsidentifikationsinformation der ersten Vorrichtung (901) umfasst; und
ein Zuordnungsmodul (502), das konfiguriert ist, um die zweite Vorrichtung (902) gemäß den Zugangsidentifikationsinformationen zu identifizieren und die Zuordnung der zweiten Vorrichtung (902) durchzuführen;
wobei die erste Vorrichtung (901) weiter umfasst:
ein Generierungsmodul (503), das konfiguriert ist, um die Zugangsidentifikationsinformationen zu generieren, und spezifisch konfiguriert ist, um die Zugangsidentifikationsinformationen statistisch zu generieren oder die Zugangsidentifikationsinformationen gemäß einer persönlichen Identifikationsnummer PIN der ersten Vorrichtung (901) zu generieren.

7. System nach Anspruch 5 oder 6, wobei das Sendemodul der zweiten Vorrichtung (902) ferner konfiguriert ist, um Anmeldeinformationen an die erste Vorrichtung (901) zu senden,
wobei das Empfangsmodul der ersten Vorrichtung (901) ferner konfiguriert ist, um, nachdem die erste Vorrichtung (901) der zweiten Vorrichtung (902) zugeordnet worden ist, die von der zweiten Vorrichtung (902) gesendeten Anmeldeinformationen zu empfangen; und
die erste Vorrichtung (901) weiter umfasst:
ein Zugangsmodul (504), das konfiguriert ist, um gemäß den Anmeldeinformationen einem drahtlosen lokalen Netzwerk (LAN) beizutreten, in dem sich die zweite Vorrichtung befindet.

8. Vorrichtung nach Anspruch 7 in Bezug auf Anspruch 6, wobei das Sendemodul des Registrars (903) ferner konfiguriert ist, um die Anmeldeinformationen an die zweite Vorrichtung (902) zu senden, und das Empfangsmodul der zweiten Vorrichtung (902) ferner konfiguriert ist, um, nachdem das Sendemodul den "Broadcast-Frame" oder den Konfigurationsantwort-Frame gesendet hat, der die Zugangsidentifikationsinformationen einschließt, die von dem Registrar (903) empfangenen Anmeldeinformationen zu empfangen.

## Revendications

1. Procédé d'association de dispositifs réalisé dans un premier dispositif (901) et un second dispositif (902), consistant :
à recevoir, au moyen du second dispositif (902), des informations d'identification d'accès d'un premier dispositif (901), dans lequel le second dispositif (902) est un dispositif d'accès sans fil avec lequel le premier dispositif (901) a pour fonction de s'associer, dans lequel les informations d'identification d'accès sont générées par le premier dispositif (901) de telle sorte que les informations d'identification d'accès puissent être lues par un utilisateur et dans lequel les informations d'identification d'accès sont entrées par l'utilisateur dans le second dispositif (902), dans lequel les informations d'identification d'accès sont spécialement générées de façon aléatoire par le premier dispositif (901) ou sont générées par le premier dispositif (901) en fonction d'un numéro d'identification personnel (PIN) du premier dispositif (901) ;
à envoyer, au moyen du second dispositif (902), une trame de diffusion ou une trame de réponse de configuration qui comporte les informations d'identification d'accès ;
à recevoir, au moyen du premier dispositif (901), la trame de diffusion ou la trame de réponse de configuration qui comporte les informations d'identification d'accès du premier dispositif (901) ; à identifier, au moyen du premier dispositif (901), le second dispositif (902) en fonction des informations d'identification d'accès, et à s'associer au second dispositif (902).

2. Procédé d'association de dispositifs réalisé dans un premier dispositif (901), un second dispositif (902) et un registraire (903), consistant :
à obtenir, au moyen du registraire (903), des informations d'identification d'accès d'un premier dispositif (901), dans lequel les informations d'identification d'accès sont générées par le premier dispositif (901) de telle sorte que les informations d'identification d'accès puissent être lues par un utilisateur et dans lequel les informations d'identification d'accès sont entrées par l'utilisateur dans le registraire (903), dans lequel les informations d'identification d'accès sont spécialement générées de façon aléatoire par le premier dispositif (901) ou sont générées par le premier dispositif (901) en fonction d'un numéro d'identification personnel (PIN) du premier dispositif (901) ; et
à envoyer, au moyen du registraire (903), les informations d'identification d'accès au second dispositif (902) associé au registraire (903),
à recevoir, au moyen du second dispositif (901), les informations d'identification d'accès du premier dispositif (901), dans lequel le second dispositif (902) est un dispositif d'accès sans fil avec lequel le premier dispositif (901) a pour fonction de s'associer ; et
à envoyer, au moyen du second dispositif (902), une trame de diffusion ou une trame de réponse de configuration qui comporte les informations d'identification d'accès ;
à recevoir, au moyen du premier dispositif (901), la trame de diffusion ou la trame de réponse de configuration qui comporte les informations d'identification d'accès du premier dispositif (901) ; et
à identifier, au moyen du premier dispositif (901), le second dispositif (902) en fonction des informations d'identification d'accès, et à s'associer au second dispositif (902).

3. Procédé selon la revendication 1 ou 2, dans lequel, après l'association avec le second dispositif (902), le procédé consiste en outre :
à envoyer, au moyen du second dispositif (901), un justificatif d'identité au premier dispositif (901) ; et
à recevoir, au moyen du premier dispositif (901), un justificatif d'identité envoyé par le second dispositif (902) ; et
à joindre, en fonction du justificatif d'identité, un réseau local sans fil dans lequel le second dispositif (902) est situé.

4. Procédé selon la revendication 3 selon sa référence à la revendication 2, dans lequel l'envoi du justificatif d'identité au premier dispositif (901) consiste :
à envoyer, au moyen du registraire (903), le justificatif d'identité au second dispositif (902) ; et
à recevoir le justificatif d'identité envoyé par le registraire (903) et à envoyer le justificatif d'identité au premier dispositif (901).

5. Système comprenant un premier dispositif (901) et un second dispositif (902), dans lequel le second dispositif (902) comprend :
un module de réception (701), configuré pour recevoir des informations d'identification d'accès du premier dispositif (901), dans lequel le second dispositif (902) est un dispositif d'accès sans fil avec lequel le premier dispositif (901) a pour fonction de s'associer, dans lequel les informations d'identification d'accès sont générées par le premier dispositif (901) de telle sorte que les informations d'identification d'accès puissent être lues par un utilisateur et dans lequel les informations d'identification d'accès sont entrées par l'utilisateur dans le second dispositif (902) ; et
un module d'envoi (702), configuré pour envoyer une trame de diffusion ou une trame de réponse de configuration qui comporte les informations d'identification d'accès ;
dans lequel le premier dispositif (901s) comprend :
un module de réception (501), configuré pour recevoir la trame de diffusion ou la trame de réponse de configuration qui comporte les informations d'identification d'accès du premier dispositif (901) ; et
un module d'association (502), configuré pour identifier le second dispositif (902) en fonction des informations d'identification d'accès, et pour s'associer au second dispositif (902) ;
dans lequel le premier dispositif (901) comprend en outre :
un module de génération (503), configuré pour générer les informations d'identification d'accès et configuré spécialement pour générer de façon aléatoire les informations d'identification d'accès ou pour générer les informations d'identification d'accès en fonction d'un numéro d'identification personnel (PIN) du premier dispositif (901).

6. Système comprenant un premier dispositif (901), un second dispositif (902) et un registraire (903), dans lequel le registraire (903) comprend :
un module de réception (801), configuré pour recevoir une information d'identification d'accès qui provient du premier dispositif (901), dans lequel l'information identification d'accès est générée par le premier dispositif (901) de telle sorte que l'information d'identification d'accès puisse être lue par un utilisateur et dans lequel l'information d'identification d'accès est entrée par l'utilisateur dans le registraire (903) ; et
un module d'envoi (802), configuré pour envoyer l'information d'identification d'accès au second dispositif (902) associé au registraire (903), dans lequel le second dispositif (902) est un dispositif d'accès sans fil avec lequel le premier dispositif (901) a pour fonction de s'associer ;
dans lequel le second dispositif (902) comprend :
un module de réception (701), configuré pour recevoir l'information d'identification d'accès du premier dispositif (901) ; et
un module d'envoi (702), configuré pour envoyer une trame de diffusion ou une trame de réponse de configuration qui comporte l'information d'identification d'accès ;
dans lequel le premier dispositif (901) comprend :
un module de réception (501), configuré pour recevoir la trame de diffusion ou la trame de réponse de configuration qui comporte l'information d'identification d'accès du premier dispositif (901) ; et
un module d'association (502), configuré pour identifier le second dispositif (902) en fonction de l'information d'identification d'accès, et pour s'associer au second dispositif (902) ;
dans lequel le premier dispositif (901) comprend en outre :
un module de génération (503), configuré pour générer l'information d'identification d'accès et configuré spécialement pour générer de façon aléatoire l'information d'identification d'accès ou pour générer l'information d'identification d'accès en fonction d'un numéro d'identification personnel (PIN) du premier dispositif (901).

7. Système selon la revendication 5 ou 6, dans lequel le module d'envoi du second dispositif (902) est en outre configuré pour envoyer un justificatif d'identité au premier dispositif (901),
dans lequel le module de réception du premier dispositif (901) est en outre configuré : après que le premier dispositif (901) s'associe au second dispositif (902), pour recevoir le justificatif d'identité envoyé par le second dispositif (902) ; et
le premier dispositif (901) comprend en outre :
un module d'accès (504), configuré pour joindre, en fonction du justificatif d'identité, un réseau local sans fil dans lequel le second dispositif est situé.

8. Dispositif selon la revendication 7 selon sa référence à la revendication 6, dans lequel le module d'envoi du registraire (903) est en outre configuré pour envoyer le justificatif d'identité au second dispositif (902) et le module de réception du second dispositif (902) est en outre configuré : après que le module d'envoi envoie la trame de diffusion ou la trame de réponse de configuration qui comporte l'information d'identification d'accès, pour recevoir le justificatif d'identité envoyé par le registraire (903).
